# EUROPÄISCHE PATENTSCHRIFT

(11) **EP 2 915 467 B1**
(45) Veröffentlichungstag und Bekanntmachung des Hinweises auf die Patenterteilung: **06.07.2016**
(21) Anmeldenummer: 15405021.5
(22) Anmeldetag: 02.03.2015
(51) Int. Cl.: A47J 31/54, A47J 31/56

(54) **Heissfluidbereiter für einen kaffeevollautomaten**
Hot fluid maker for automatic coffee machine
Producteur de fluides chauds pour machines à café automatiques

(30) Priorität: 04.03.2014 EP 14405019
(43) Veröffentlichungstag der Anmeldung: 09.09.2015
(73) Patentinhaber: JURA ELEKTROAPPARATE AG, 4626 Niederbuchsiten (CH)
(72) Erfinder: Reyhanloo, Shahryar, 6405 Immensee (CH); Kao, Ted, 11200 O TG Bungah Penang (MY)
(74) Vertreter: EGLI-EUROPEAN PATENT ATTORNEYS

(56) Entgegenhaltungen:
- EP-A2- 2 423 619

## Beschreibung

Die vorliegende Erfindung betrifft einen Heissfluidbereiter für einen Kaffeevollautomaten, ein Verfahren zum Betreiben eines Kaffeevollautomaten mit einem Heissfluidbereiter sowie die Verwendung eines Heissfluidbereiters in einem Kaffeevollautomaten.

Als Kaffeevollautomaten werden Vorrichtungen zum Heissgetränkebezug bezeichnet, bei welchen auf die Initiierung einer Bedienperson hin ein Kaffeegetränk ablaufgesteuert automatisch zubereitet und ausgegeben wird. In der Regel sind derartige Kaffeevollautomaten mit einer Trinkwasserzufuhr in Form eines Wasserbehälters oder eines Trinkwasseranschlusses, einem Mahlwerk zum Zermahlen von Kaffeebohnen, einer Brüheinheit zum Bereiten des Heissgetränks aus den zermahlenen Kaffeebohnen und heissem Wasser sowie einer Heissgetränk-Ausgabe-Einrichtung in Form einer Düse oder dergleichen ausgestattet. Um die Ausgabe unterschiedlicher Arten von Kaffeegetränken zu ermöglichen, insbesondere um es dem Nutzer zu gestatten, mithilfe des Kaffeevollautomaten Milch zu erwärmen und/oder aufzuschäumen, sind herkömmliche Kaffeevollautomaten bekannt, welche zusätzlich einen vollautomatisch gesteuerten oder auch manuell gesteuerten Dampfbezug an einer Dampfausgabedüse oder dergleichen ermöglichen. Um Bauteile und damit Material zu sparen, ist es üblich, einen derartigen Kaffeevollautomaten mit nur einer primären Heizeinrichtung in Form eines Durchlauferhitzers auszustatten. Dieser eine Durchlauferhitzer dient - bei entsprechender Ansteuerung durch eine zumeist vorhandene Maschinensteuerungsschaltung - sowohl zum Bereiten von heissem Wasser für den Kaffeebrühvorgang (im Bereich um 100° C), als auch zum Bereiten von Nutzdampf zur Ausgabe an der Dampfbezügsdüse, wobei er dazu das zugeführte Trinkwasser zur Überführung in den gasförmigen Zustand auf Temperaturen um ca. 160° C aufheizen muss.

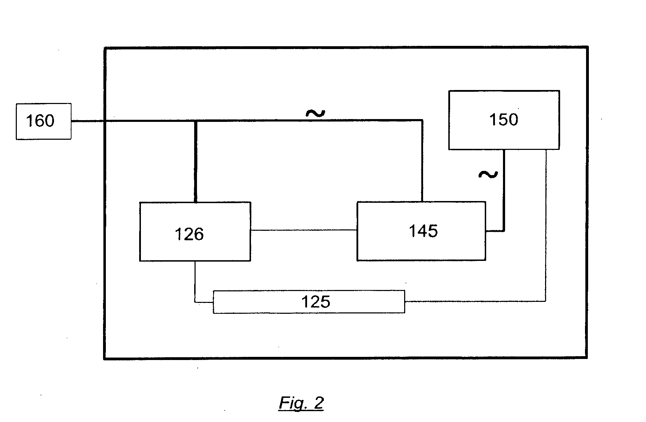

Es ist bei herkömmlichen Kaffeevollautomaten bekannt, zur bedarfsweisen Ansteuerung des Durchlauferhitzers ein ansteuerbares Schaltelement zwischen die Wechselspannungsversorgung und den Durchlauferhitzer zu schalten. Fig. 2 zeigt einen derartigen herkömmlichen Schaltungsaufbau schematisch in Form eines Blockdiagramms. Von einer externen Wechselspannungsversorgung 160 zugeführte Wechselspannung (in der Regel gewöhnliche Netz-Wechselspannung von 230 V und 50 Hz) wird an den einen Leistungsanschluss eines Triac 145 angelegt; ausgangsseitig ist der Triac mit einer Fluid-Heizeinrichtung, hier in Form eines Thermoblocks 150, verbunden. Zur Ansteuerung des Triac ist ein Mikrocontroller 126 vorgesehen, welcher in Abhängigkeit des Signals von einem Fluid-Temperatursensor 125, der die Temperatur des Fluids.am Ausgang des Thermoblocks 150 misst, den Triac ansteuert. Eine derartige Ansteuerung ist bei der herkömmlichen Ansteuerungselektronik nur derart möglich, dass der Triac 145 die volle Wechselspannung an den Thermoblock 150 über einen Zeitraum von mehreren Sekunden bis zu einigen Minuten durchschaltet oder nicht.

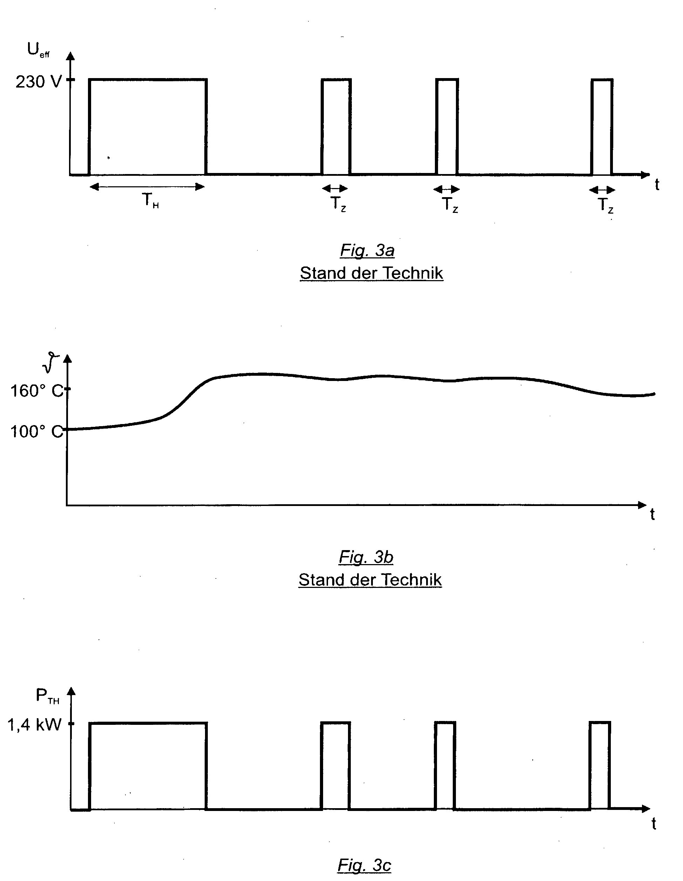

Herkömmliche Kaffeevollautomaten nehmen in der Regel eine Leistung um 1,4 kW auf. Beim erstmaligen Einschalten des Kaffeevollautomaten, d. h. direkt nach der Inbetriebnahme, findet dann durch entsprechende Ansteuerung mittels des Mikrocontrollers 126 ein Aufheizvorgang statt, um das Fluid am Thermoblock auf Nutztemperatur, d. h. ca. 100° C aufzuheizen. Soll dann ein Dampfbezug stattfinden, so muss das zugeführte Fluid von 100° C auf ca. 160° C aufgeheizt werden. Während eines derartigen Aufheizzeitraums T_{H}, der schematisch in den Diagrammen aus den Fig. 3a, 3b und 3c gezeigt ist, steuert der Mikrocontroller 126 den Triac 145 durchgehend derart an, dass er die Wechselspannung von der Wechselspannungsversorgung 160 an den Thermoblock 150 durchschaltet, bis das Feedback-Signal vom Temperatursensor 125 das Erreichen oder Überschreiten der Solltemperatur von beispielsweise 160° C angibt. Während des darauffolgenden Dampfbezuges wird der Thermoblock 150 dann intervallweise ausgeschaltet bzw. zwischenzeitlich in kurzen Zwischenheizzeiträumen T_{Z} von einigen wenigen Sekunden wieder eingeschaltet, um die Solltemperatur für den Nutzdampf von ca. 160° C zu halten.

Die in Fig. 3c gezeigte Heizleistung P_{TH} (durch den weitestgehend ohmschen Verbraucher reine Wirkleistung) folgt dabei der in Fig. 3a dargestellten Effektivspannung U_{eff} am Ausgang des Triacs 145. Es stellt sich dann beispielsweise ein Verlauf der Fluidtemperatur ϑ ein, wie er in Fig. 3b gezeigt ist.

Derartige herkömmliche Heissfluidbereiter weisen nun den Nachteil auf, dass die Zeit für das anfängliche Aufheizen, d. h. der Zeitraum T_{H} relativ lang ist, beispielsweise länger als 5 Sekunden. Soll ein Dampfbezug stattfinden, so muss die volle Zeit T_{H} abgewartet werden, was den Bedienkomfort und die maximale zubereitbare Kaffeemenge pro Zeiteinheit verringert.

Ein derartiger Heissfluidbereiter ist aus EP-A-242 3619 bekannt.

Es ist daher die Aufgabe der vorliegenden Erfindung, einen Heissfluidbereiter für einen Kaffeevollautomaten derart weiterzubilden, dass die Aufheizzeit verringert wird. In Bezug auf das erfindungsgemässe Verfahren ist es eine Aufgabe der vorliegenden Erfindung, ein Verfahren zum Betreiben eines Kaffeevollautomaten anzugeben, bei welchem die Wartezeit für einen Kaffeebezug verkürzt ist.

Die Erfindung wird gelöst durch einen Heissfluidbereiter für einen Kaffeevollautomaten mit den Merkmalen des unabhängigen Anspruches 1 sowie durch ein Verfahren zum Betreiben eines Kaffeevollautomaten mit den Merkmalen des unabhängigen Anspruchs 8.

Es ist hierbei vorgesehen, dass der Heissfluidbereiter für einen Kaffeevollautomaten gemäss der vorliegenden Erfindung Folgendes aufweist:
- eine Temperatur-Steuerungsvorrichtung;
- eine Fluid-Heizeinrichtung;
- eine Gleichrichterschaltung; und
- eine Leistungs-Halbleiterschalteinrichtung,
wobei die Gleichrichterschaltung eingangsseitig mit einer Wechselspannungsversorgung und ausgangsseitig unter Zwischenschaltung der Leistung-Halbleiterschalteinrichtung mit der Fluid-Heizeinrichtung verbunden ist, wobei die Leistungs-Halbleiterschalteinrichtung derart ansteuerbar ausgebildet ist, dass sie wahlweise den Ausgang der Gleichrichterschaltung an die Fluid-Heizeinrichtung durchschaltet, und wobei die Temperatur-Steuerungsvorrichtung dazu ausgelegt ist, die Ansteuerung der Leistungs-Halbleiterschalteinrichtung pulsweise vorzunehmen, um so eine Temperatursteuerung vorzunehmen.

Mit anderen Worten, mithilfe der Ansteuerungselektronik, d. h. mithilfe der Temperatur-Steuerungsvorrichtung wird nunmehr kein Triac angesteuert; vielmehr findet eine Gleichrichtung der von der Wechselspannungsversorgung zugeführten Netz-Wechselspannung statt. Die gleichgerichtete Netz-Wechselspannung (Gleichspannung) wird dann mithilfe eines Leistungs-Halbleiterelementes, d. h. mithilfe einer Leistungs-Halbleiterschalteinrichtung nach entsprechender Ansteuerung durch die Temperatur-Steuerungsvorrichtung geschaltet. Die Leistungs-Halbleiterschalteinrichtung ist hierbei ein Halbleiterbauelement, mit welchem auch sehr hohe Leistungen im Gleichstrombereich geschaltet werden können. Durch die entsprechende Ansteuerung kann also die Gleichspannung wahlweise an die Fluidheizeinrichtung angelegt werden. Als besonderer Vorteil ergibt sich, dass erfindungsgemäss nun eine besonders leistungsstarke Fluidheizeinrichtung verwendet werden kann, beispielsweise mit einer Leistungsaufnahme von 2,8 kW. Infolge der Ansteuerung mittels der Temperatur-Steuerungsvorrichtung und der Leistungs-Halbleiterschalteinrichtung, welche sehr schnell stattfinden kann, kommt es auch bei einer hohen Nennleistung der Fluidheizeinrichtung zu einem guten Ansteuerungsverhalten und somit nicht zu einer Überhitzung des Fluids. Dadurch kann die Aufheizzeit zum Aufheizen des Fluids von Brühtemperatur (Wassertemperatur ca. 100° C) auf Nutzdampftemperatur (Dampftemperatur von ca. 160° C) signifikant verkürzt werden, beispielsweise auf nunmehr nur noch 2,5 bis 3 Sekunden.

Gemäss einem Aspekt der Erfindung ist es vorgesehen, dass die Temperatur-Steuerungsvorrichtung dazu ausgelegt ist, das Verhältnis von Pulsdauer zu Pausendauer während der pulsweisen Ansteuerung der Leistungs-Halbleiterschalteinrichtung zu variieren. Hierdurch ergibt sich der besondere Vorteil, dass durch diese Art der Ansteuerung die Fluidheizeinrichtung mit einer beliebigen Leistung zwischen 0 Watt und der Nennleistung, d. h. beispielsweise 2,8 kW betrieben werden kann. Insbesondere dann, wenn nur eine einzige Fluidheizeinrichtung sowohl zum Bereiten von Brühwasser im Bereich von ungefähr 100° C als auch zum Bereiten von Nutzdampf vorgesehen ist, kann dann diese Fluidheizeinrichtung im Normalfall - d. h. zum Bereiten von Brühwasser - mit der bekannten herkömmlichen Nennleistung von ca. 1,4 kW betrieben werden. Soll an dem Kaffeevollautomaten jedoch ein Produkt mit Dampfanteil (Cappuccino, Latte Macchiato usw.) bezogen werden, und das möglichst rasch, so muss nach der entsprechenden Anwahl durch die Bedienperson das Fluid relativ schnell auf eine höhere Temperatur aufgeheizt werden. In diesem Fall kann dann die Leistung der Fluidheizeinrichtung durch die entsprechende Variation der Ansteuerung von Pulsdauer und Pausendauer derart angesteuert werden, dass die Fluidheizeinrichtung mit ihrer vollen Nennleistung von beispielsweise 2,8 kW betrieben wird. Dadurch wird der Aufheizzeitraum stark verkürzt.

Gemäss einem weiteren Aspekt der Erfindung ist es vorgesehen, dass die Fluidheizeinrichtung dazu ausgebildet ist, in Abhängigkeit von der Ansteuerung eingangsseitig zugeführtes Trinkwasser auf eine zum Durchführen eines Kaffeebrühvorganges geeignete Wassertemperatur aufzuheizen oder eingangsseitig zugeführtes Trinkwasser auf Nutzdampftemperatur aufzuheizen und jeweils ausgangsseitig bereitzustellen.

Hierdurch ergibt sich der besondere Vorteil, dass ein und dieselbe Fluidheizeinrichtung durch ihre variable Ansteuerungsmöglichkeit sowohl zum Bereiten von Brühwasser, als auch zum Bereiten von Nutzdampf eingesetzt werden kann. Eine entsprechende Ansteuerung kann in Antwort auf ein von einer Bedienperson eingegebenes Signal, beispielsweise einen Auswahl-Tastendruck oder dergleichen vorgenommen werden.

Gemäss einem weiteren Aspekt der Erfindung kann die Fluid-Heizeinrichtüng dazu ausgebildet sein, das Verhältnis von Pulsdauer zu Pausendauer beim Aufheizen des zugeführten Trinkwassers zu variieren, um eine Veränderung der Heizleistung der Fluid-Heizeinrichtung zu veranlassen. Auf diese Weise ist es vorteilhafterweise möglich, während des Aufheizens des Trinkwassers (z.B. während eines Brühvorganges zum Brühen von Kaffee) die Heizleistung der Fluid-Heizeinrichtung im Wesentlichen stufenlos zu variieren (jeweils in Abhängigkeit von dem Verhältnis von Pulsdauer zu Pausendauer), wobei die momentane Heizleistung umso grösser ist, je kleiner die Pausendauer im Vergleich zur Pulsdauer ist.

Gemäss einem weiteren Aspekt der Erfindung ist es vorgesehen, dass die Fluidheizeinrichtung einen Thermoblock mit einer Nennleistung ≥ 2 kW vorzugsweise von ungefähr 2,8 kW ist. Ein Thermoblock mit einer derart hohen Nennleistung ermöglicht es besonders gut, den Aufheizzeitraum insbesondere für das Aufheizen von einer Brühwassertemperatur (ca. 100° C) auf eine Nutzdampftemperatur (ca. 160° C) entscheidend zu verkürzen; auch für einen anfänglichen Aufheizvorgang ist dies jedoch von Vorteil, wenn beispielsweise direkt nach dem Einschalten möglichst schnell die gewünschte Brühwassertemperatur erreicht werden soll.

Gemäss einem weiteren Aspekt der Erfindung ist es vorgesehen, dass die Temperatur-Steuerungsvorrichtung dazu ausgebildet ist, das Verhältnis von Pulsdauer zu Pausendauer dann derart einzustellen, dass die Fluid-Heizeinrichtung in einem mittleren Leistungsbereich, vorzugsweise ca. 1,4 kW, betrieben wird, wenn die Soll-Fluidtemperatur etwa 100° C beträgt, und dass die Temperatur-Steuerungsvorrichtung dazu ausgelegt ist, das Verhältnis von Pulsdauer zu Pausendauer dann derart einzustellen, dass die Fluid-Heizeinrichtung in ihrem Nenn-Leistungsbereich, vorzugsweise ca. 2,8 kW betrieben wird, wenn die Soll-Fluidtemperatur im Dampfbereich, vorzugweise im Bereich von ca. 160° C liegt.

Die Temperatur im Dampfbereich bezieht sich hierbei auf den Nenndruck des Kaffeevollautomaten bzw. auf den Normdruck (Umgebungsdruck). Durch diese besondere Ausgestaltung ergibt sich der Vorteil, dass bei einer beispielsweise durch die Maschinensteuerung vorgegebenen Soll-Fluidtemperatur zum Bereiten eines Heissgetränkes (ca. 100° C Brühwassertemperatur) die Fluidheizeinrichtung in einem mittleren Leistungsbereich betrieben werden kann, was zu einem weniger starken Überschwingverhalten der tatsächlichen Fluidtemperatur am Ausgang der Fluid-Heizeinrichtung führt, als wenn die Fluid-Heizeinrichtung auch zum Beziehen von Brühwasser mit ihrer vollen Nennleistung von beispielsweise 2,8 kW betrieben wird. Soll dann jedoch ein Dampfbezugsvorgang stattfinden, beispielsweise um ein Heissgetränkeprodukt mit Dampfanteil zuzubereiten, so wird in diesem Fall (Soll-Fluidtemperatur im Dampfbereich von ca. 160° C) die Fluid-Heizeinrichtung in ihrem Nenn-Leistungsbereich betrieben, um den Aufheizzeitraum zu verkürzen.

Gemäss einem weiteren Aspekt der Erfindung ist vorgesehen, dass der Heissfluidbereiter ferner einen Temperatursensor zum Erfassen der Fluidtemperatur in der Fluid-Heizeinrichtung oder an deren Ausgang aufweist. Hierbei ist die Temperatur-Steuerungsvorrichtung dazu ausgelegt, das verhältnis von Pulsdauer zu Pausendauer derart zu variieren, dass eine vorab festgelegte oder festlegbare Soll-Fluidtemperatur am Ausgang der Fluid-Heizeinrichtung erzielt wird.

Hierdurch ist ein besonders genaues Einregeln der gewünschten Temperatur möglich, was es seinerseits wiederum ermöglicht, die Brühwassertemperatur für einen Kaffee-Brühvorgang optimal einzustellen und im Falle eines gewünschten Dampfbezuges auch die Temperatur für den Dampfanteil (Nutzdampftemperatur) möglichst optimal einzustellen.

Gemäss einem weiteren Aspekt der Erfindung ist die Leistungs-Halbleiterschalteinrichtung als MOSFET, vorzugsweise als Power-MOSFET ausgebildet. Es sei hierbei angemerkt, dass auch andere Bauformen grundsätzlich möglich sind, z.B. IGBTs oder dergleichen. Die Ausbildung als Power-MOSFET weist hierbei den besonderen Vorteil auf, dass niedrige Verluste im eingeschwungenen (durchgeschalteten) Zustand auftreten, bei gleichzeitig niedrigen Schaltverlusten (Transientenverlusten).

Bezogen auf das erfindungsgemässe Verfahren wird die Aufgabe dadurch gelöst, dass das Verfahren zum Betreiben eines Kaffeevollautomaten vorgesehen ist, wobei der Kaffeevollautomat zum Bereiten eines heissen Fluids zumindest einen Heissfluidbereiter aufweist, der seinerseits Folgendes aufweist:
- eine Temperatur-Steuerungsvorrichtung;
- eine Fluid-Heizeinrichtung;
- eine Gleichrichterschaltung; und
- eine Leistungs-Halbleiterschalteinrichtung,
wobei die Gleichrichterschaltung eingangsseitig mit einer Wechselspannungsversorgung und ausgangsseitig unter Zwischenschaltung der Leistungs-Halbleiterschälteinrichtung mit der Fluid-Heizeinrichtung verbunden ist, wobei die Leistungs-Halbleiterschalteinrichtung derart ansteuerbar ausgebildet ist, dass sie wahlweise den Ausgang der Gleichrichterschaltung an die Fluid-Heizeinrichtung durchschaltet, und wobei die Temperatur-Steuerungsvorrichtung dazu ausgelegt ist, die Ansteuerung der Leistungs-Halbleiterschalteinrichtung pulsweise vorzunehmen.

Der besondere Vorteil des erfindungsgemässen Verfahrens liegt darin, dass die Fluid-Heizeinrichtung mit verschiedenen Heizleistungen betrieben werden kann, und zwar in Abhängigkeit einer Eingangsvariablen in Form eines Parameters. Dieser Parameter ist derart ablaufbezogen, dass dann, wenn wunschgemäss (beispielsweise nach Vorgabe durch die Maschinensteuerung des Kaffeevollautomaten) der Aufheizzeitraum des Fluids verkürzt werden soll, die Fluidheizeinrichtung mit ihrer vollen Nennleistung betrieben werden kann. Wenn andererseits der Parameter ablaufbezogen angibt, dass nur eine niedrigere Heizleistung vonnöten ist, so kann durch die Variation des Verhältnisses von Pulsdauer zu Pausendauer der Ansteuerung der Leistungs-Halbleiterschalteinrichtung gemäss dem erfindungsgemässen Verfahren auch eine niedrigere Heizleistung angefordert werden, um beispielsweise ein günstigeres Überschwingverhalten der tatsächlichen am Ausgang der Fluid-Heizeinrichtung ausgegebenen Fluidtemperatur zu erreichen.

Gemäss einem Aspekt der Erfindung ist es vorgesehen, dass in dem Verfahren der ablaufbezogene Parameter angibt, ob Heisswasser oder Dampf bezogen werden soll. Alternativ oder zusätzlich gibt der ablaufbezogene Parameter an, auf welcher Temperatur das Heisswasser oder der Dampf bezogen werden soll.

Hierbei ergibt sich der besondere Vorteil, dass parameterabhängig die Leistung (Heizleistung) der Fluidheizeinrichtung gewählt werden kann, so dass dann, wenn besonders schnell Nutzdampf zubereitet werden soll, die Fluid-Heizeinrichtung auf ihrer Nennleistung betrieben wird;'wenn jedoch Heisswasser zum Brühen auf einer relativ exakt einzustellenden Brühwassertemperatur bezogen werden soll, so wird durch die entsprechende Angabe des ablaufbezogenen Parameters in dem erfindungsgemässen Verfahren die Fluid-Heizeinrichtung auf einer Heizleistung betrieben, welche niedriger als ihre Nennleistung ist, um somit das Überschwingverhalten der Fluidtemperatur positiv zu beeinflussen und das Fluid möglichst genau auf seiner Solltemperatur zu beziehen.

Gemäss einem weiteren Aspekt der Erfindung weist das Verfahren einen Verfahrensschritt auf, bei welchem das Verhältnis von Pulsdauer zu Pausendauer beim Beziehen von Heisswasser oder Dampf verändert wird. Auf diese Weise kann die Heizleistung der Fluid-Heizeinrichtung jeweils in Abhängigkeit vom Verhältnis von Pulsdauer zu Pausendauer im Wesentlichen stufenlos variiert werden, z.B. während die Fluid-Heizeinrichtung Heisswasser zum Brühen von Kaffee oder Dampf bereitstellt. Dabei ist die momentane Heizleistung der Fluid-Heizeinrichtung umso grösser, je kleiner die Pausendauer im Vergleich zur Pulsdauer ist.

Gemäss einem weiteren Aspekt der Erfindung weist das Verfahren den Verfahrensschritt auf, wonach die Fluidtemperatur, die am Ausgang der Fluidheizeinrichtung bereitgestellt werden soll, ermittelt wird, und wobei der ablaufbezogene Parameter angibt, ob oder ob nicht die Fluidtemperatur eine ablaufbezogene Soll-Fluidtemperatur für die durchzuführende Heissgetränke-Zubereitung um mehr als einen festgelegten oder festlegbaren Wert unterschreitet.

Hierdurch kann erreicht werden, dass nicht nur für das Aufheizen von der Bereitschaftstemperatur (ca. 100° C Brühwassertemperatur) auf die Nutzdampftemperatur (ca. 160° C Dampftemperatur) die Aufheizzeit verkürzt wird; vielmehr kann dann auch nach dem Absenken der Temperatur (z. B. zur Verwirklichung einer Energiesparfunktion zwischen den Kaffeebezügen) der Zeitraum bis zum erneuten Erreichen der Kaffeebereitschaft (Brühwassertemperatur dann wieder auf 100° C) verkürzt werden. Mit anderen Worten: Immer dann, wenn ein besonders schnelles Aufheizen erforderlich ist, weil die Soll-Fluidtemperatur (für Brühwasser bzw. für Dampf) weit oberhalb der tatsächlichen momentanen Fluidtemperatur liegt, durch Ansteuerung mit Nennleistung der Fluid-Heizeinrichtung die Wartezeit erheblich verkürzt werden. Bei einer geringeren Differenz zwischen Soll-Fluidtemperatur und der tatsächlichen Fluidtemperatur wird das Verhältnis von Pulsdauer zu Pausendauer dann derart variiert, dass zwar immer noch ein relativ schnelles Aufheizen stattfindet; durch einen Betrieb der Fluid-Heizeinrichtung auf einer Leistung geringer als die Nennleistung kann dann jedoch ein besseres Überschwingverhalten sichergestellt werden, so dass z. B. die Brühtemperatur von 100° C (optimale Brühtemperatur) auch bei Initiierung des Brühvorganges nicht unnötig überschritten wird.

Gemäss einem weiteren Aspekt der Erfindung ist es vorgesehen, dass die Temperatur-Steuerungsvorrichtung die Fluid-Heizeinrichtung während eines Bereitschaftszeitraums des Kaffeevollautomaten derart ansteuert, dass ihre Heizleistung durchgehend Null beträgt. Mit anderen Worten: Während des Bereitschaftszeitraums zwischen zwei aufeinanderfolgenden Kaffeebezügen erfolgt kein Heizvorgang mittels der Fluid-Heizeinrichtung. Dies ist bei der erfindungsgemässen Lösung nicht nötig, da zu Beginn eines darauffolgenden Kaffeebezuges das Erreichen der notwendigen Fluidtemperatur durch die entsprechende Ansteuerung sehr schnell vonstattengeht und somit nur eine minimale bis gar keine Wartezeit auftritt. Hierdurch ist eine erhebliche Energieersparnis während längerer Pausenzeiten zwischen den Produktbezügen möglich, da die Heizung ganz ausgeschaltet werden kann. Die Temperatur am Ausgang der Fluid-Heizeinrichtung muss also nicht mehr ständig auf einer Bereitschaftstemperatur gehalten werden, was sich insbesondere dann positiv auf die Energiebilanz auswirkt, wenn über einen längeren Zeitraum, währenddessen das Fluid abkühlen kann, kein Produktbezug stattfindet.

Gemäss einem weiteren Aspekt der erfindungsgemässen Lösung wird ein oben genannter Heissfluidbereiter in einem Kaffeevollautomaten verwendet. Hierbei weist der Kaffeevollautomat eine Ablaufsteuerungseinrichtung zum Steuern eines automatischen oder halbautomatischen Heissgetränk-Zubereitungsvorganges auf. Die Ablauf-Steuerungseinrichtung nimmt hierbei die Festlegung der Soll-Fluidtemperatur für die Temperatur-Steuerungsvorrichtung in Abhängigkeit vom Zeitablauf des Heissgetränke-Zubereitungsvorganges vor.

Hierdurch ergibt sich der besondere Vorteil, dass unabhängig von einer Bedienperson vollautomatisch während eines Heissgetränke-Zubereitungsvorganges mittels der Ablauf-Steuerungseinrichtung des Kaffeevollautomaten eine Beeinflussung der Heizleistung der Fluid-Heizeinrichtung stattfinden kann. Dies ist insbesondere bei kombinierten Produkten mit Dampf- und Brühwasseranteil vorteilhaft, da durch eine derartige automatische Ansteuerung der Wartezeitraum zwischen den einzelnen Aufheizvorgängen nochmals verkürzt werden kann.

Bei der erfindungsgemässen Verwendung kann wiederum vorgesehen sein, dass die Temperatur-Steuerungsvorrichtung die Fluid-Heizeinrichtung während eines Bereitschaftszeitraums des Kaffeevollautomaten derart ansteuert, dass ihre Heizleistung durchgehend Null beträgt.

Hierdurch ergibt sich wiederum der besondere Vorteil, dass in längeren Pausenzeiten zwischen den Produktbezügen nicht mehr geheizt werden muss, so dass auch bei einer Abkühlung des Thermoblockes dieser besonders schnell wieder auf seine SollTemperatur für den jeweils gewählten Produktbezug aufgeheizt werden kann. In der Zwischenzeit kann Energie gespart werden.

Die Erfindung wird nun unter Bezugnahme auf die beigefügten Zeichnungen näher erläutert.

Es zeigen:
- Fig. 1:: den schematischen Aufbau eines Kaffeevollautomaten;
- Fig. 2:: ein Blockdiagramm eines aus dem Stand der Technik bekannten Heissfluidbereiters;
- Fig. 3a-3c:: Zeitverlaufsdiagramme der Effektivspannung (Fig. 3a), der Fluidtemperatur (Fig. 3b) sowie der thermischen Leistung (Fig. 3c) an einer Fluid-Heizeinrichtung in einem aus dem Stand der Technik bekannten Heissfluidbereiter gemäss Fig. 2;
- Fig. 4:: in schematischer Vereinfachung, den Verlauf der Wirkleistungskurve über der Zeit bei dem aus dem Stand der Technik bekannten Heissfluidbereiter gemäss Fig. 3c;
- Fig. 5:: ein schematisches Blockdiagramm eines erfindungsgemässen Heissfluidbereiters gemäss einer Ausführungsform der vorliegenden Erfindung;
- Fig. 6a-6c:: Zeitverlaufsdiagramme des Effektivwerts der Spannung (Fig. 6a), der Fluidtemperatur (Fig. 6b) sowie der Wirkleistung (Fig. 6c) des erfindungsgemässen Heissfluidbereiters aus Fig. 5; und
- Fig. 7:: schematisch den Verlauf der Herzleistung als Funktion der Zeit gemäss Fig. 6c in Gegenüberstellung zu dem Heizleistungsverlauf als Funktion der Zeit gemäss Fig. 4.

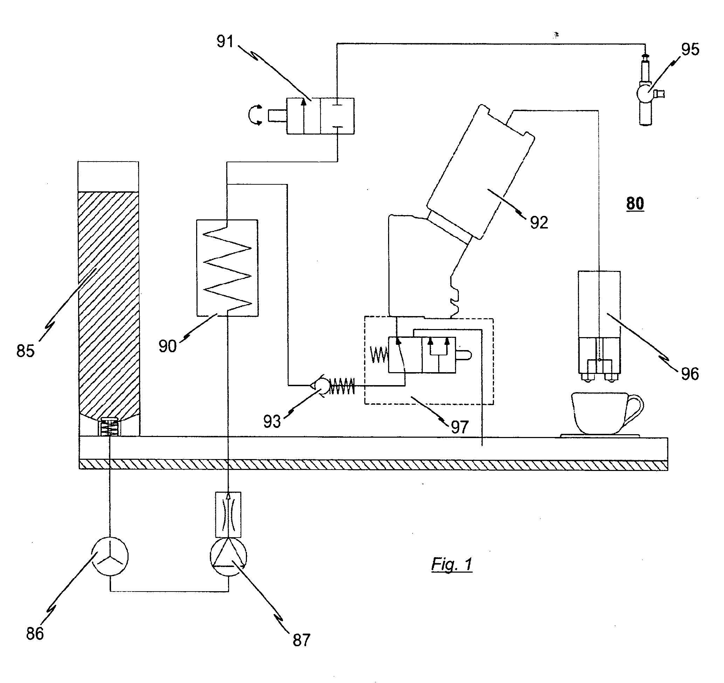

Fig. 1 zeigt schematisch den Aufbau eines Kaffeevollautomaten 80. Ein Wassertank 85 dient der Frischwasserzufuhr zu einem Durchlauferhitzer 90, wobei zur Messung der durchflossenen Wassermenge ein Durchflussmesser 86 sowie zum Fördern des Frischwassers eine Pumpe 87 zwischengeschaltet sind. Der Durchlauferhitzer 90 dient vorliegend als Heissflüidbereiter mit entsprechender Ansteuerungsmöglichkeit und ist mit einer (nicht dargestellten) Maschinen-Ablaufsteuerung des Kaffeevollautomaten verbunden. Ausgangsseitig ist an dem Durchlauferhitzer 90 ein Umschaltventil 91 vorgesehen, welches das Umschalten der Zufuhr der Ausgabe des Durchlauferhitzers 90 zu einer Aufschäumeinrichtung 95 (mit Dampf betrieben) bzw. zu einer Brüheinheit 92 (mit heissem Brühwasser betrieben) ermöglicht. Eingangsseitig ist die Brüheinheit 92 mit einem Rückschlagventil 93 sowie einem Drainage-Ventil 97 versehen. Ausgangsseitig wird das in der Brüheinheit 92 zubereitete Kaffeegetränk einer Kaffee-Ausgabeeinrichtung 96 zugeführt, welche das zubereitete Kaffeegetränk ausgibt, beispielsweise in ein Trinkgefäss (Tasse), wie in Fig. 1 dargestellt.

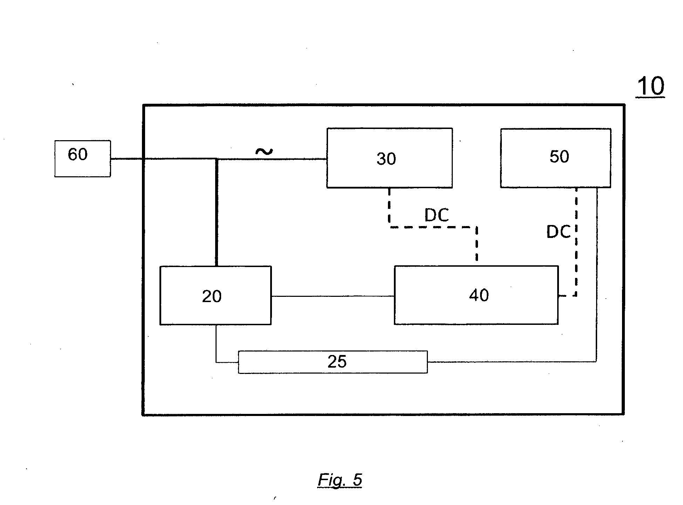

Bei dem in Fig. 5 dargestellten Blockschaltbild weist der in dem Durchlauferhitzer 90 des Kaffeevollautomaten 80 angeordnete Heissfluidbereiter 10 gemäss der Ausführungsform der Erfindung eine Wechselspannungsversorgung 60 auf, welche in der Regel einem Netzspannungsanschluss (230 V, 50 Hz) entspricht. Diese (von der Wechselspannungsversorgung 60 bereitgestellte) Netz-Wechselspannung wird nun einer Temperatur-Steuerungsvorrichtung 20 zugeführt; gleichzeitig wird sie einer Gleichrichterschaltung 30 zugeführt, welche ausgangsseitig eine gleichgerichtete Netzspannung auf ihrem Effektivwert (ca. 325 V DC) an eine Leistungs-Halbleiterschalteinrichtung 40 in Form eines Power-MOSFET ausgibt. Die Leistungs-Halbleiterschalteinrichtung 40 wird über eine Schnittstellenverbindung von der Temperatur-Steuerungsvorrichtung 20 angesteuert. Ausgangsseitig ist die Leistungs-Halbleiterschalteinrichtung 40 mit einer Fluid-Heizeinrichtung 50 in Form eines Thermoblocks verbunden, welcher die eigentliche Durchlauferhitzungsfunktion des Durchlauferhitzers 90 bereitstellt.

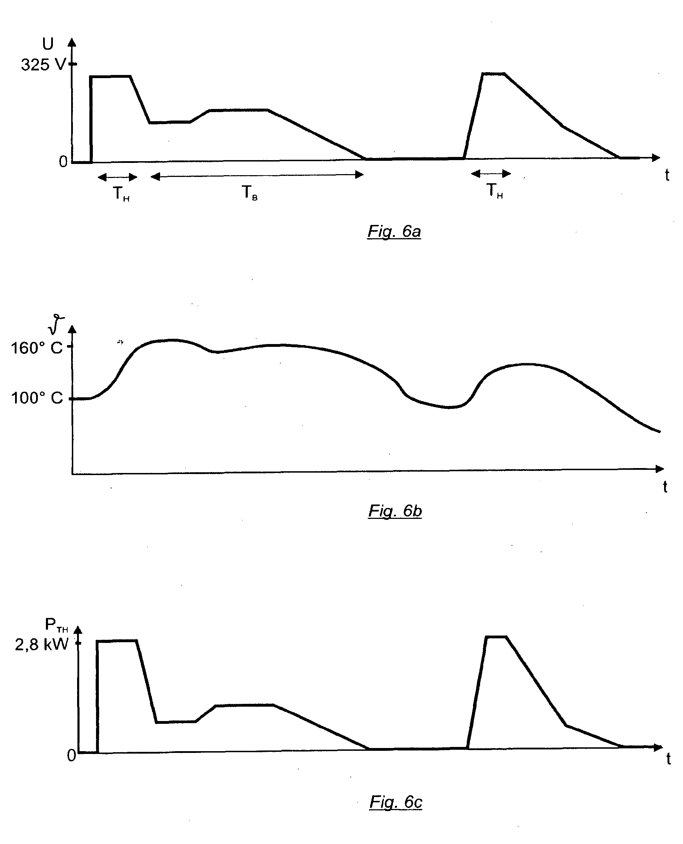

In Fig. 6a ist der Verlauf der Gleichspannung bei einer erfindungsgemässen Ansteuerung der Leistungs-Halbleiterschalteinrichtung 40 mittels der Temperatur-Steuerungsvorrichtung 20 gezeigt. Wie aus Fig. 5 ersichtlich, dient ein mit der Fluid-Heizeinrichtung 50 verbundener Temperatursensor 25, der die Fluid-Temperatur ϑ in der Fluid-Heizeinrichtung 50 bzw. an ihrem Ausgang misst, zur Rückführung einer Messgrösse (hier: der Temperatur) an die Temperatur-Steuerungsvorrichtung 20. Während eines Aufheizzeitraums T_{H} wird nun, wie aus Fig. 6a ersichtlich, die am Eingang der Fluid-Heizeinrichtung 50 mittels der Leistungs-Halbleiterschalteinrichtung 40 angelegte Gleichspannung zunächst voll durchgeschaltet, so dass - wie in Fig. 6b dargestellt - die Fluidtemperatur ϑ für einen Dampfbezug von ihrer Brühwasser von ca. 100° C relativ schnell (< 5 Sekunden) auf die Nutzdampftemperatur von 160° C ansteigt. Der zugehörige Verlauf der Heizleistung P_{Th} ist in Fig. 6c dargestellt. Wie zu erkennen ist, befindet sich während des Aufheizzeitraums T_{H} die Heizleistung P_{Th} auf ihrem Maximum von 2,8 kW.

Nach Abschluss des Aufheizzeitraums wird die Spannung und somit die Heizleistung gedrosselt; der Einfachheit halber ist in Fig. 6a nicht die tatsächlich anliegende gepulste Gleichspannung gezeigt, sondern vielmehr der Spannungsverlauf der effektiven Gleichspannung an einem trägen Verbraucher. Gleichwohl wird aber deutlich, dass nach erfolgtem Kaffeebezug die Spannung und damit die thermische Leistung für einen kurzen Bereitschaftszeitraum T_{B} auf einem mittlerem Wert gehalten wird, um dann gegen Ende des Bereitschaftszeitraumes T_{B} auf Null abgesenkt zu werden, um Energie zu sparen. In diesem Zeitraum sinkt dann auch die Fluidtemperatur ϑ und fällt auf einen Wert unterhalb der Brühwassertemperatur.von 100° C. Zu Beginn eines erneuten Kaffeebezugs wird in einem nachfolgenden Aufheizzeitraum T_{H} die Spannung wiederum auf ihren vollen Wert von ca. 325 V gebracht, wodurch die Wirkleistung für diesen Zeitraum wiederum der Nennleistung von 2,8 kW entspricht. Während dieses Zeitraums steigt die Fluidtemperatur ϑ wiederum relativ schnell an, wodurch der Aufheizzeitraum T_{H} verkürzt und damit die Wartezeit verringert werden kann.

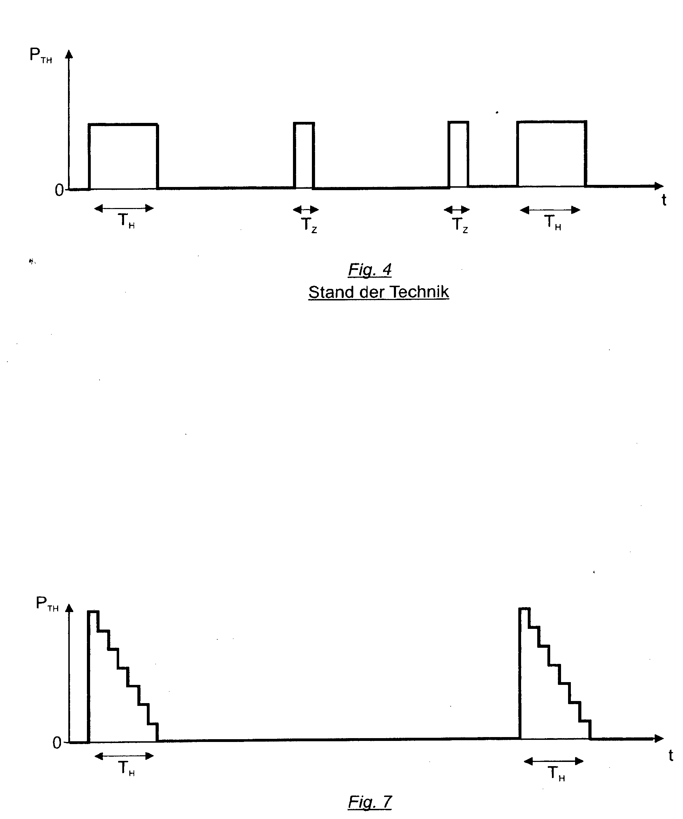

Wie aus der schematischen Gegenüberstellung der jeweiligen Zeitverläufe der Wirkleistungen ersichtlich (die herkömmliche Lösung gemäss dem Stand der Technik ist in Fig. 4 dargestellt; die erfindungsgemässe Lösung ist in Fig. 7 dargestellt), ist es erfindungsgemäss nicht mehr nötig, während eines Bereitschaftszeitraumes T_{B} Zwischenheizzeiträume T_{Z} einzufügen, um die Fluidtemperatur ϑ ständig auf der Brühwassertemperatur von ca. 100° C zu halten.

Wie aus Fig. 7 ersichtlich, sind vielmehr zu Beginn eines jeden Brühvorganges jeweils Aufheizvorgänge (Aufheizzeiträume T_{H}) mit einer im Vergleich zur herkömmlichen Lösung hohen Leistung der Fluid-Heizeinrichtung 50 vorgesehen. Dadurch ist es möglich, den Aufheizzeitraum T_{H} und somit die Wartezeit zu Beginn eines Brühvorganges oder für einen Dampfbezug erheblich zu verringern.

Es sei an dieser Stelle angemerkt, dass die Erfindung nicht auf die dargestellte Ausführungsform beschränkt ist. Abwandlungen und mögliche Weiterbildungen sind dem Fachmann geläufig.

## Patentansprüche

1. Heissfluidbereiter (10) für einen Kaffeevollautomaten, der Folgendes aufweist:
• eine Temperatur-Steuerungsvorrichtung (20);
• eine Fluid-Heizeinrichtung (50);
• eine Gleichrichterschaltung (30); und
• eine Leistungs-Halbleiterschalteinrichtung (40),
wobei die Gleichrichterschaltung (30) eingangsseitig mit einer Wechselspannungsversorgung (60) undausgangsseitig unter Zwischenschaltung der Leistungs-Halbleiterschalteinrichtung (40) mit der Fluid-Heizeinrichtung (50) verbunden ist, wobei die Leistungs-Halbleiterschalteinrichtung (40) derart ansteuerbar ausgebildet ist, dass sie wahlweise den Ausgang der Gleichrichterschaltung (30) an die Fluid-Heizeinrichtung (50) durchschaltet, und wobei die Temperatur-Steuerungsvorrichtung (20) dazu ausgelegt ist, die Ansteuerung der Leistungs-Halbleiterschalteinrichtung (40) pulsweise vorzunehmen, um so eine Temperatursteuerung vorzunehmen.

2. Heissfluidbereiter (10) nach Anspruch 1, wobei die Temperatür-Steuerungsvorrichtung (20) dazu ausgelegt ist, das Verhältnis von Pulsdauer zu Pausendauer während der pulsweisen Ansteuerung der Leistungs-Halbleiterschalteinrichtung (40) zu variieren.

3. Heissfluidbereiter (10) nach einem der Ansprüche 1 bis 2, wobei die Fluid-Heizeinrichtung (50) dazu ausgebildet ist, in Abhängigkeit von der Ansteuerung eingangsseitig zugeführtes Trinkwasser auf eine zum Durchführen eines Kaffee-Brühvorgangs geeignete Wassertemperatur aufzuheizen oder eingangsseitig zugeführtes Trinkwasser auf Nutzdampftemperatur aufzuheizen und jeweils ausgangsseitig bereitzustellen.

4. Heissfluidbereiter (10) nach Anspruch 3, wobei die Fluid-Heizeinrichtung (50) dazu ausgebildet ist, das Verhältnis von Pulsdauer zu Pausendauer beim Aufheizen des zugeführten Trinkwassers zu variieren, um die Heizleistung der Fluid-Heizeinrichtung (50) im Wesentlichen stufenlos zu regeln.

5. Heissfluidbereiter (10) nach einem der Ansprüche 1 bis 4, wobei die Fluid-Heizeinrichtung (50) ein Thermoblock mit einer Nennleistung ≥ 2 kW, vorzugsweise von ungefähr 2,8 kW ist.

6. Heissfluidbereiter (10) nach einem der Ansprüche 1 bis 5, wobei die Temperatur-Steuerungsvorrichtung (20) dazu ausgelegt ist, dass Verhältnis von Pulsdauer zu Pausendauer dann derart einzustellen, dass die Fluid-Heizeinrichtung (50) in einem mittleren Leistungsbereich, vorzugsweise ca. 1,4 kW betrieben wird, wenn die Soll-Fluidtemperatur etwa 100° C beträgt, und dass die Temperatur-Steuerungsvorrichtung (20) dazu ausgelegt ist, das Verhältnis von Pulsdauer zu Pausendauer dann derart einzustellen, dass die Fluid-Heizeinrichtung (50) in ihrem Nenn-Leistungsbereich, vorzugsweise ca. 2,8 kW, betrieben wird, wenn die Soll-Fluidtemperatur im Dampfbereich, vorzugsweise im Bereich von ca. 160° C liegt.

7. Heissfluidbereiter (10) nach einem der Ansprüche 1 bis 6, wobei der Heissfluidbereiter (10) ferner einen Temperatursensor (25) zum Erfassen der Fluidtemperatur (ϑ) in der Fluid-Heizeinrichtung oder an deren Ausgang aufweist, und wobei die Temperatur-Steuerungsvorrichtung (20) dazu ausgelegt ist, das Verhältnis von Pulsdauer zu Pausendauer derart zu variieren, dass eine vorab festgelegte oder festlegbare Soll-Fluidtemperatur am Ausgang der Fluid-Heizeinrichtung erzielt wird.

8. Heissfluidbereiter (10) nach einem der Ansprüche 1 bis 7, wobei die Leistungs-Halbleiterschalteinrichtung (40) als MOSFET, vorzugsweise als Power-MOSFET ausgebildet ist.

9. Verfahren zum Betreiben eines Kaffeevollautomaten (80), wobei der Kaffeevollautomat (80) zum Bereiten eines heissen Fluides zumindest einen Heissfluidbereiter (10) aufweist, der seinerseits folgendes aufweist:
• eine Temperatur-Steuerungsvorrichtung (20);
• eine Fluid-Heizeinrichtung (50);
• eine Gleichrichterschaltung (30); und
• eine Leistungs-Halbleiterschalteinrichtung (40),
wobei die Gleichrichterschaltung (30) eingangsseitig mit einer Wechselspannungsversorgung (60) und ausgangsseitig unter Zwischenschaltung der Leistungs-Halbleiterschalteinrichtung (40) mit der Fluid-Heizeinrichtung (50) verbunden ist, wobei die Leistungs-Halbleiterschalteinrichtung (40) derart ansteuerbar ausgebildet ist, dass sie wahlweise den Ausgang der Gleichrichterschaltung (30) an die Fluid-Heizeinrichtung (50) durchschaltet, und wobei. die Temperatur-Steuerungsvorrichtung (20) dazu ausgelegt ist, die Ansteuerung der Leistungs-Halbleiterschalteinrichtung (40) pulsweise vorzunehmen, wobei das Verfahren die folgenden Verfahrensschritte aufweist:
• Ermitteln eines ablaufbezogenen Parameters für eine durchzuführende Heissgetränke-Zubereitung;
• Variieren des Verhältnisses von Pulsdauer zu Pausendauer der Ansteuerung der Leistungs-Halbleiterschalteinrichtung (40) in Abhängigkeit von dem ablaufbezogenen Parameter, um eine zugehörige Heizleistung (P_{TH}) der Fluid-Heizeinrichtung einzustellen.

10. Verfahren nach Anspruch 9, wobei der ablaufbezogene Parameter angibt, ob Heisswasser oder Dampf bezogen werden soll und/oder wobei der ablaufbezogene Parameter angibt, auf welcher Temperatur (ϑ) das Heisswasser oder der Dampf bezogen werden soll.

11. Verfahren nach Anspruch 10, wobei das Verhältnis von Pulsdauer zu Pausendauer beim Beziehen von Heisswasser oder Dampf verändert wird, um die Heizleistung der Fluid-Heizeinrichtung (50) im Wesentlichen stufenlos zu variieren.

12. Verfahren nach Anspruch 9, wobei das Verfahren ferner den folgenden Verfahrensschritt aufweist:
• Ermitteln der Flüidtemperatur (ϑ), die am Ausgang der Fluid-Heizeinrichtung (50) bereitgestellt werden soll,
und wobei der ablaufbezogene Parameter angibt, ob oder ob nicht die Fluidtemperatur (ϑ) eine ablaufbezogene Soll-Fluidtemperatur für die durchzuführende Heissgetränke-Zubereitung um mehr als einen festgelegten oder festlegbaren Wert unterschreitet.

13. Verfahren nach einem der Ansprüche 9 bis 12, wobei die Temperatur-Steuerungsvorrichtung (20) die Fluid-Heizeinrichtung (50) während eines Bereitschaftszeitraums (T_{B}) des Kaffeevollaütomaten (80) derart ansteuert, dass ihre Heizleistung durchgehend Null beträgt.

14. Verwendung des Heissfluidbereiters nach einem der Ansprüche 1 bis 7 in einem Kaffeevollautomaten (80), wobei der Kaffeevollautomat (80) eine Ablauf-Steuerungseinrichtung zum Steuern eines automatischen oder halbautomatischen Heissgetränk-Zubereitungsvorganges aufweist, und wobei die Ablauf-Steuerungseinrichtung die Festlegung der Soll-Fluid-Temperatur für die Temperatur-Steuerungsvorrichtung (20) in Abhängigkeit vom Zeitablauf des Heissgetränk-Zubereitungsvorganges vornimmt.

15. Verwendung nach Anspruch 14, wobei die Temperatur-Steuerungsvorrichtung (20) die Fluid-Heizeinrichtung (50) während eines Bereitschaftszeitraums (T_{B}) des Kaffeevollautomaten (80) derart ansteuert, dass ihre Heizleistung durchgehend Null beträgt.

## Claims

1. A hot fluid preparation unit (10) for a fully automatic coffee machine, comprising the following:
• a temperature control device (20);
• a fluid heating arrangement (50),
• a rectifier circuit (30); and
• power semiconductor switching device (40),
wherein the rectifier circuit (30) is connected at an input of the rectifier circuit (30) to an AC voltage supply (60) and at an output of the rectifier circuit (30) via the power semiconductor switching device (40) to the fluid heating arrangement (50), wherein the power semiconductor switching device (40) is designed to be controllable in such a manner that it selectively switches the output of the rectifier circuit (30) through to the fluid heating arrangement (50), and wherein the temperature control device (20) is designed to carry out a control of the power semiconductor switching device (40) in a pulsed manner, in order thus to provide temperature control.

2. The hot fluid preparation unit (10) according to claim 1, wherein the temperature control device (20) is designed to vary the ratio of pulse duration to pulse interval of pulses provided for the control of the power semiconductor switching device (40).

3. The hot fluid preparation unit (10, according to any one of claims 1 to 2, wherein the fluid heating arrangement (50) is designed, in accordance with the control of the power semiconductor switching device, to heat up drinking water supplied at an input of the fluid heating arrangement (50) to a water temperature suitable for carrying out a coffee brewing process, or to heat up drinking water supplied at the input of the fluid heating arrangement (50) to a useful steam temperature, and in each case to provide it at an output of the fluid heating arrangement (50).

4. The hot fluid preparation unit (10) according to claim 3, wherein the fluid heating arrangement (50) is designed to vary the ratio of pulse duration to pulse interval when heating the supplied drinking water, in order to regulate the thermal power of the fluid heating arrangement (50) in a substantially continuous manner.

5. The hot fluid preparation unit (10) according to any one of claims 1 to 4, wherein the fluid heating arrangement (50) is a thermoblock with a rated power of 2 kW, preferably of approximately 2.8 kW.

6. The hot fluid preparation unit (10) according to any one of claims 1 to 5, wherein the temperature control device (20) is designed to adjust the ratio of pulse duration to pulse interval such that the fluid heating arrangement (50) is operated in a medium power range, preferably approximately 1.4 kW if the target fluid temperature is about 100 °C, and that the temperature control device (20) is designed to adjust the ratio of pulse duration to pulse interval such that the fluid heating arrangement (50) is operated in its rated power range, preferably approximately 2.8 kW, if the target fluid temperature lies in the steam range, advantageously in the region of approximately 160 °C.

7. The hot fluid preparation unit (10) according to any one of claims 1 to 6, wherein the hot fluid preparation unit (10) additionally comprises a temperature sensor (25) for sensing the fluid temperature (ϑ) in the fluid heating arrangement (50) or at the output thereof, and wherein the temperature control device (20) is configured to vary the ratio of pulse duration to pulse interval such that a target fluid temperature which is, or is enabled to be, specified in advance is attained at the output of the fluid heating arrangement (50).

8. The hot fluid preparation unit (10) according to any one of claims 1 to 7, wherein the power semiconductor switching device (40) is implemented as a MOSFET, preferably as a power MOSFET.

9. A method for operating a fully automatic coffee machine (80), wherein to prepare a hot fluid the fully automatic coffee machine (80) comprises at least one hot fluid preparation unit (10), which in turn comprises the following:
• a temperature control device (20);
• a fluid heating arrangement (50),
• a rectifier circuit (30); and
• a power semiconductor switching device (40),
wherein the rectifier circuit (30) is connected at an input of the rectifier circuit (30) to an AC voltage supply (60) and an output of the rectifier circuit (30) via the power semiconductor switching device (40) to the fluid heating arrangement (50), wherein the power semiconductor switching device (40) is designed to be controllable in such a manner that it selectively switches the output of the rectifier circuit (30) through to the fluid heating arrangement (50), and wherein the temperature control device (20) is designed to carry out a control of the power semiconductor switching device (40) in a pulsed manner, wherein the method comprises the following method steps:
• determination of a process-related parameter for a hot beverage preparation to be carried out;
• varying of the ratio of pulse duration to pulse interval of pulses provided for the control of the power semiconductor switching device (40) in accordance with the process-related parameter, in order to adjust an associated thermal power (P_{TH}) of the fluid heating arrangement.

10. The method according to claim 9, wherein the process-related parameter specifies whether hot water or steam is to be dispensed and/or wherein the process-related parameter specifies at what temperature (ϑ) the hot water or the steam is to be dispensed.

11. The method according to claim 10, wherein the ratio of pulse duration to pulse interval is modified when dispensing hot water or steam, in order to vary the thermal power of the fluid heating arrangement (50) in a substantially continuous manner.

12. The method according to claim 9, wherein the method additionally comprises the following method step:
• determination of the fluid temperature (ϑ) that is to be provided at the output of the fluid heating arrangement (50),
and wherein the process-related parameter specifies whether or not the fluid temperature (ϑ) falls below a process-related target fluid temperature for the hot beverage preparation to be carried out by more than a specified or specifiable value.

13. The method according to any one of claims 9 to 12, wherein the temperature control device (20) controls the fluid heating arrangement (50) during a standby period (T_{B}) of the fully automatic coffee machine (80) in such a manner that its thermal power amounts to zero throughout.

14. A use of the hot fluid preparation unit according to any one of claims 1 to 7 in a fully automatic coffee machine (80), wherein the fully automatic coffee machine (80) comprises a flow control device for driving an automatic or semi-automatic hot beverage preparation process, and wherein the flow control device assumes the task of specifying the target fluid temperature for the temperature control device (20) in accordance with the temporal sequence of the hot beverage preparation process.

15. The use according to claim 14, wherein the temperature control device (20) controls the fluid heating arrangement (50) during a standby period (T_{B}) of the fully automatic coffee machine (80) in such a manner that its thermal power amounts to zero throughout.

## Revendications

1. Producteur de fluide chaud (10) pour machine à café automatique qui comporte les éléments suivants:
• un dispositif de commande de la température (20),
• un système de chauffage de fluide (50),
• un montage en redresseur (30), et
• un système à semi-conducteurs de puissance (40),
pour lequel le montage en redresseur (30) est raccordé côté entrée à une alimentation de tension alternative (60) et côté sortie avec intercalage du système à semi-conducteurs de puissance (40) à un système de chauffage de fluide (50), pour lequel le système à semi-conducteurs de puissance (40) est constitué de manière à pouvoir être piloté de telle sorte qu'il met en communication, selon nécessité, la sortie du montage en redresseur (30) avec le système de chauffage de fluide (50), et pour lequel le dispositif de commande de la température (20) est conçu à cet effet pour procéder par impulsion au pilotage du système à semi-conducteurs de puissance (40) pour procéder ainsi à la commande de la température.

2. Producteur de fluide chaud (10) selon la revendication 1, pour lequel le dispositif de commande de la température (20) est conçu de manière à faire varier le rapport entre la durée d'impulsion et la durée de pause pendant le pilotage par impulsion du système à semi-conducteurs de puissance (40).

3. Producteur de fluide chaud (10) selon l'une quelconque des revendications 1 à 2, pour lequel le système de chauffage de fluide (50) est constitué pour chauffer de l'eau potable acheminée côté entrée en fonction du pilotage à une température d'eau appropriée à l'exécution d'un procédé d'ébouillantage du café ou pour chauffer de l'eau potable acheminée côté entrée à une température de vaporisation utile et pour produire respectivement celle-ci côté sortie.

4. Producteur de fluide chaud (10) selon la revendication 3, pour lequel le système de chauffage de fluide (50) est constitué de manière à faire varier le rapport entre la durée d'impulsion et la durée de pause lors du chauffage de l'eau potable acheminée pour réguler pour l'essentiel en continu la puissance de chauffage du système de chauffage de fluide (50).

5. Producteur de fluide chaud (10) selon l'une quelconque des revendications 1 à 4, pour lequel le système de chauffage de fluide (50) est un groiupe aérotherme avec une puissance nominale de ≥ 2 kW, de préférence d'environ 2,8 kW.

6. Producteur de fluide chaud (10) selon l'une quelconque des revendications 1 à 5, pour lequel le dispositif de commande de la température (20) est conçu de manière à régler ensuite le rapport entre la durée d'impulsion et la durée de pause de telle manière que le système de chauffage de fluide (50) fonctionne dans une plage de puissance moyenne, de préférence environ 1,4 kW, si la température de fluide théorique est d'environ 100° C et que le dispositif de commande de la température (20) est conçu de manière à régler ensuite le rapport entre la durée d'impulsion et la durée de pause de manière à ce que le système de chauffage de fluide (50) fonctionne dans sa plage de puissance nominale, de préférence environ 2,8 kW, si la température de fluide théorique se situe dans la plage de vaporisation, de préférence dans la plage d'environ 160° C.

7. Producteur de fluide chaud (10) selon l'une quelconque des revendications 1 à 6, pour lequel le producteur de fluide chaud (10) comporte en plus un capteur de température (25) pour saisir la température du fluide (ϑ) dans le système de chauffage de fluide ou à sa sortie et pour lequel le dispositif de commande de la température (20) est conçu de manière à faire varier le rapport entre la durée d'impulsionn et la durée de pause de telle manière qu'une température de fluide théorique préalablement définie ou définissable soit obtenue à la sortie du système de chauffage de fluide.

8. Producteur de fluide chaud (10) selon l'une quelconque des revendications 1 à 7, pour lequel le système à semi-conducteurs de puissance (40) est constitué comme un transistor à effet de champ à oxyde métallique (MOSFET), de préférence comme un transistor à effet de champ à oxyde métallique (MOSFET) de puissance.

9. Procédé pour faire fonctionner une machine à café automatique (80), pour lequel la machine à café automatique (80) comporte au moins un producteur de fluide chaud (10) pour produire un fluide chaud, qui comporte de son côté :
• un dispositif de commande de la température (20),
• un système de chauffage de fluide (50),
• un montage en redresseur (30), et
• un système à semi-conducteurs de puissance (40), pour lequel le montage en redresseur (30) est raccordé côté entrée à une alimentation de tension alternative (60) et côté sortie avec intercalage du système à semi-conducteurs de puissance (40) à un système de chauffage de fluide (50), pour lequel le système à semi-conducteurs de puissance (40) est constitué de manière à pouvoir être piloté de telle sorte qu'il met en communication, selon nécessité, la sortie du montage en redresseur (30) avec le système de chauffage de fluide (50), et pour lequel le dispositif de commande de la température (20) est conçu à cet effet pour procéder par impulsion au pilotage du système à semi-conducteurs de puissance (40), pour lequel le procédé comporte les étapes de procédé suivantes:
• détermination d'un paramètre en rapport avec le déroulement pour une préparation de boisson chaude à exécuter,
• variation du rapport entre la durée d'impulsion et la durée de pause du pilotage du système à semi-conducteurs de puissance (40) en fonction du paramètre en rapport avec le déroulement pour régler une puissance de chauffage correspondante (P_{TH}) du système de chauffage de fluide.

10. Procédé selon la revendication 9, pour lequel le paramètre en rapport avec le déroulement indique si de l'eau chaude ou de la vapeur doit être apportée et/ou pour lequel le paramètre en rapport avec le déroulement indique à quelle température (ϑ) l'eau chaude ou la vapeur doit être apportée.

11. Procédé selon la revendication 10, pour lequel le rapport entre la durée d'impulsion et la durée de pause lors de l'apport en eau chaude ou en vapeur est modifié pour faire varier pour l'essentiel en continu la puissance de chauffage du système de chauffage de fluide (50).

12. Procédé selon la revendication 9, pour lequel le procédé comprend en plus l'étape de procédé suivante :
• détermination de la température du fluide (ϑ), qui doit être produite à la sortie du système de chauffage de fluide (50),
• et pour lequel le paramètre en rapport avec le déroulement indique si la température du fluide (ϑ) dépasse ou non de plus d'une valeur définie ou définissable une température de fluide théorique en rapport avec le déroulement pour la production de boisson chaude à exécuter.

13. Procédé selon l'une quelconque des revendications 9 à 12, pour lequel le dispositif de commande de la température (20) pilote le système de chauffage de fluide (50) pendant une période d'attente (T_{B}) de la machine à café automatique (80) de telle manière que sa puissance de chauffage est en permanence nulle.

14. Utilisation du producteur de fluide chaud selon l'une quelconque des revendications 1 à 7 dans une machine à café automatique (80), pour lequel la machine à café automatique (80) comporte un système de pilotage de l'écoulement pour piloter un processus de préparation de boisson chaude automatique ou semi-automatique et pour lequel le système de pilotage de l'écoulement procède à la détermination de la température du fluide théorique pour le système de commande de la température (20) en fonction de la séquence de temps du processus de préparation de boisson chaude.

15. Utilisation selon la revendication 14 pour laquelle le dispositif de commande de la température (20) pilote le système de chauffage de fluide (50) pendant une période d'attente (T_{B}) de la machine à café automatique (80) de telle manière que sa puissance de chauffage est en permanence nulle.
